# EUROPEAN PATENT APPLICATION

(11) **EP 4 571 604 A1**
(43) Date of publication of application: **18.06.2025**
(21) Application number: 23216267.7
(22) Date of filing: 13.12.2023
(51) Int. Cl.: G06Q 10/00, G06Q 10/08, G06Q 10/083, G06Q 10/087

(54) **A METHOD FOR TIME-MANAGING OF HANDLING MULTIPLE FOOD ITEMS**

(71) Applicant: Kitopi One SPV Limited, Abu Dhabi (AE)
(72) Inventor: Witas, Lukasz, 34-340 Jelesnia (PL); Mudlaff, Lukasz, 32-406 Zakliczyn (PL)
(74) Representative: Patrade A/S

(57) **Abstract**

The present invention relates to a computer-implemented method for managing a process of handling multiple food items, said food item(s) being packaging comprising food, wherein each food item has a food item ID, and wherein said multiple food items are associated to one order ID, said method comprising: for each order ID: receiving the order ID and said multiple food item IDs; and for each food item: retrieving one or more time intervals for the food item, preferably from a server, such as a database, calculating at least a total time consumption (ΔT,item) being a sum of the time intervals for the food item, and generating a starting sequence of each food item comprised in the order.

## Description

### FIELD OF THE INVENTION

The present invention relates to a computer-implemented method for managing a process of handling multiple food items, said food item(s) being packaging(s) comprising food, wherein each food item has a food item ID, and wherein said multiple food items are associated to one order ID, said method comprising:
for each order ID:
   - receiving the order ID and said multiple food item IDs; and
for each food item:
   - retrieving one or more time intervals for the food item, preferably from a server, such as a database,
      calculating at least a total time consumption (ΔT,item) being a sum of the time intervals for the food item,
   - generating a starting sequence of each food item comprised in the order.

### BACKGROUND OF THE INVENTION

Within the area of time-managing food items, it is known to manage several orders of food items, however, the different food items within the orders are in today's known systems and methods not handled separately but as one total order unit. This means that the preparation of the food items in the order today often will be started at the same time and in the same kitchen.

However, not all food items have the same preparation time and not all food items may necessarily be suitable for being prepared in the same kitchen.

Therefore, today's known management methods of preparing food items in a food order are not optimal for multiple large orders, and especially not optimal for orders comprising food items appropriate for being made in a plurality of different kitchens and still be managed to be prepared/cooked and ready for delivery at the same time.

Furthermore, today's known management methods of preparing food items in a food order are not optimal for having a total order finished for delivery without any waiting time or at least with as less waiting time as possible.

Too much waiting time can lead to e.g. improper temperature, when the order is received by the customer. Furthermore, too much waiting time for the customer of the order can lead to dissatisfied customers.

Therefore, within the area of time-managing food orders with several food items from multiple kitchens, an optimized method is requested. The method requested is preferably a computer-implemented method generating a starting sequence of each food item comprised in a food order, such that the food items within the food order can each be handled accurately according to the requirements of the food items.

Hence, an improved method of generating a starting sequence of each food item comprised in the order would be advantageous, preferably an efficient and reliable method.

### OBJECT OF THE INVENTION

It is an object of the present invention to provide an alternative to the prior art.

In particular, it may be seen as an object of the present invention to provide a method for generating a starting sequence that solves the above-mentioned problems.

### DESCRIPTION OF THE INVENTION

Thus, the object described above and several other objects are intended to be obtained in a first aspect of the invention by providing a computer-implemented method for managing a process of handling multiple food items, said food item(s) being packaging(s) comprising food,
wherein each food item has a food item ID,
wherein said multiple food items is associated to one order ID,
said method comprising:
   for each order ID:
      - receiving the order ID and said multiple food item IDs; and
   for each food item:
      - retrieving one or more time intervals for the food item, preferably from a server, such as a database,
         calculating at least a total time consumption (ΔT,item) being a sum of the time intervals for the food item,
      - generating a starting sequence of each food item comprised in the order comprising the acts of:
         a. identifying the food item with the longest total time consumption,
         b. setting an order time (ΔT,order) being the total time consumption of the identified food item,
         c. for each of the remaining food items calculating a time difference (ΔT,item delay) between the order time and the total time consumption (ΔT,item) of each of the food items,
         d. assigning an order starting time (Tstart) to the identified food item with the longest total time consumption,
         e. for each of the remaining food items assigning a starting time (Tstart,item) based on the calculated time difference (ΔT,item) and the order starting time (Tstart), so that each food item in the order has the same expected end time (Tend).

The invention is particularly, but not exclusively, advantageous for providing a starting sequence for preparing food items, wherein the starting sequence provides an optimal time coordination for multiple food orders, and further provides an ideal time coordination for orders comprising food orders to be made in a plurality of different kitchens and still be managed to be prepared and ready for e.g. delivery at the same time.

Thereby the starting sequence is being efficient and reliable and provides a decreased waiting time for prepared food items in a food order. Also, this method will decrease the labor cost.

The invention is thus providing a reliable estimate of preparation time and/or of the packing time.

It should be understood that the consumer/customer may place their orders through a number of different mobile smart devices installed with the user application, such as an app.

Within the invention, the order may be received as an external data input.

The order comprising food items can be made by consumers via a customer platform, such as an app on a mobile device.

The order may thereby be received externally and therefrom be assigned a food order ID.

In the context of the present invention, it should be understood that "food item" is a food packaging, such as a box, a bowl, paper/wrap, or any desired packaging for food, wherein the packaging comprises a prepared/cooked food product, such as a burger, pizza, salad, sandwich, or any food placed in an order.

In the context of the present invention, it should be understood that "ID" can be various IDs, such as a bar code, a matrix code, a QR code, Radio Frequency ID, etc. The invention should not be limited to a specific type of ID.

The ID of the invention may at least be representing or comprising information about the food item, such as the type of food packaging and/or the dimensions of the food packaging, the ID may comprise information on the material of the food packaging, the weight of the packaging and/or the food product in the packaging, information about the food product in the packaging, such as if the product is a warm, a cold or a frozen product and/or the texture of the food product, such as if the product is solid, fluid, hard, soft, etc.

Within the invention, is should be understood that a food order comprising multiple different food items can be made in several different kitchens, i.e. one food item being a pizza is made in one kitchen, a second food item being a burger with fries is made in a second kitchen, a third food item being a soup is made in a third kitchen, etc. All the food items are in the same order but are made in different kitchens, and preferably collected in one packaging area, wherein the food item preferably is arriving at least substantially at the same time. The several food items are then packed into one order and dispatched for delivery.

In one embodiment of the invention a predetermined pick-up time is defined and/or given for the order, wherein the calculation of the end time (Tend) of the order is adapted to correspond to the pick-up time.

The embodiment is particularly, but not exclusively, advantageous for providing a possibility of calculating the start of preparation of the food item according to a predetermined given time. Thus, calculating the starting time backwards.

In one embodiment of the invention a dish finish time for each food item is assigned to the food item, such as a time stamp, when said food item is packed into packaging.

In one embodiment of the invention the step of retrieving the one or more time intervals for each food item comprises one or more, preferably all, of:
- one or more preparation time intervals,
- one or more handling time intervals, and/or
- one or more delivery time intervals.

The embodiment is particularly, but not exclusively, advantageous for providing the possibility of coordinating the time of starting according to any desired end time.

The end time can thereby be set as the preparation time only, or the preparation time and the handling time, or preferably the sum of all the above-mentioned intervals.

In one embodiment of the invention the preparation time intervals include at least one or more, preferably all, of:
- queue time,
- prepare waiting time,
- preparation time, and/or
- first relocation time.

Within the invention, the time periods may as examples of a preferred embodiment define:
- queue time defines if it is not the right time to start preparation of a food item.
- prepare waiting time defines stations not having capacity, starting delay.
- preparation time defines the actual cooking/preparation time.
- first relocation time defines the transfer from kitchen to packing area, preferably on a conveyor belt.

In one embodiment of the invention, if a queue time is retrieved, the starting time Tstart,item is generated to be activated when the queue time has ended.

The embodiment is particularly, but not exclusively, advantageous for allowing the change of the start time of preparing a food item, if a delay, such as queue time, is known. By changing the start time, the coordination of end time for the food items is thereby coordinated, if one or more food items is expected to include a queue time.

In one embodiment of the invention the one or more retrieved time intervals are handling time intervals,
wherein the handling time intervals are at least one or more, preferably all, of:
- waiting rack time,
- collecting time, and/or
- packing time.

Within the invention, the time periods may as examples of a preferred embodiment define:
- waiting rack time may e.g. define food unnoticed or stockpiling in rush hours.
- collecting time defines the time between picking up the first food item from. an order and collecting the last food item from an order.
- packing time defines packing and sorting the food item once all of the food items in an order are collected.

In one embodiment of the invention the one or more retrieved time intervals are delivery time intervals, wherein the delivery time intervals are at least one or more, preferably all, of:
- second relocation time,
- pick-up rack time,
- dispatch time, and/or
- delivery time.

Within the invention, the time periods may as examples of a preferred embodiment define:
- second relocation time defines the transfer time from a packaging station to a pick-up rack.
- pick-up rack time defines that an order being ready to be dispatched is waiting in a rack or dispatch area.
- dispatch time defines the dispatch process.
- delivery time defines the delivery time to the final costumer of the order.

In one embodiment of the invention the method further comprises the steps of:
- calculating the total time consumption for the order, wherein the total time consumption is a sum of preparation time intervals.

In one embodiment of the invention the method further comprises the steps of:
- calculating the total time consumption for the order, wherein the total time consumption is a sum of preparation time intervals and handling time intervals.

In one embodiment of the invention the method further comprises the steps of:
- calculating the total time consumption for the order, wherein the total time consumption is a sum of preparation time intervals, handling time intervals and delivery time intervals.

In one embodiment of the invention, if a food item is late on time compared to the calculated total time consumption of that food item:
- recalculating the starting times for the rest of the food items in the order that are not yet activated, and
- assigning a recalculated starting time (Tstart,re) to each food item.

The embodiment is particularly, but not exclusively, advantageous for allowing the change of the start time for preparing a food item, if a delay, such as queue time, is known. By changing the start time, the coordination of end time for the food items is thereby coordinated, if one or more food items are expected to be late.

Unexpected waiting may, among more options, originate in :
- preparing/cooking the food items in the kitchens.
- handling the prepared food items, such as when packing the items.
- pick-up / delivery.

In one embodiment of the invention the recalculation of the starting times for the rest of the food items in the order that are not yet activated, comprises:
- adding the time of delay (Tdelay) to the original starting time (Tstart) to each food item.

In one embodiment of the invention an algorithm is configured for generating a starting sequence based on the retrieved time intervals of the food item(s).

In one embodiment of the invention the method further comprises the step of:
- providing a machine-learning model for improving the starting sequence of food items, and
- training the machine-learning model.

The embodiment is particularly, but not exclusively, advantageous for providing a method being improved every time a food order comprising food items is handled.

Preferably, at least the starting time of each food item based on retrieved food item time intervals is improved.

In one embodiment of the invention, several kitchens are provided for preparing food items.

The embodiment is particularly, but not exclusively, advantageous for allowing a wide range of different food items to be ordered in the same order.

In one embodiment of the invention, the kitchen's layout, and/or configuration, and/or arrangement and/or position, are determined in order to optimize the time consumption of food items in an order.

The embodiment is particularly, but not exclusively, advantageous for enabling better understanding of a kitchen's (kitchen station's) utilization and productivity, and furthermore optimization for brands and labor allocation.

There may also be provided a tool used to visualize kitchen layout, create stations, and map products to them thereby further enabling understanding of the station's utilization and productivity.

The invention thereby overall provides intelligent mapping (IMAP), which may be defined as a kitchen capacity planning tool.
- Kitchen Layout Visualization: IMAP includes a visual representation of the kitchen layout. This feature allows for a better understanding of the overall kitchen setup and station placements.
- Station-Level Performance Metrics: Introduce key performance at the station level. This includes metrics such as OPLH, IPLH, Prep Time, POR, Sales & Revenue, and Kitchen Specific IR. By monitoring these metrics, identifying areas that require improvements and optimize performance.
- Threshold Identification: To provide actionable insights, establishing thresholds for productivity metric. These thresholds serve as benchmarks for evaluating the station's productivity. Any deviations beyond the thresholds are visually highlighted, enabling quick identification of areas requiring attention.
- Heatmap Display: Productivity metric and threshold violations are presented on a heatmap, providing a visually intuitive representation. This enables easy identification of stations with high/mid/low productivity or areas where improvements are needed.

The benefits are among other:
- Improved Operational Efficiency: By providing a clear visual representation of the kitchen layout and performance metrics at the station level, IMAP enables better coordination, resource allocation, and workflow optimization.
- Timely Decision-Making: The use of thresholds and heatmap visualization allows for identifying stations that require improvements. This enables prompt decision-making and requirements to address performance issues.
- Enhanced Productivity: By closely monitoring key metrics and addressing areas of improvement promptly, we can enhance overall productivity and output quality, leading to improved customer satisfaction and profitability.

In a second aspect of the invention, the invention relates to the use of the computer-implemented method for pacing a process of handling multiple food items.

In a third aspect of the invention, the invention relates to a computer-readable medium, preferably a storage medium, comprising instructions which, when executed by a computer, cause the computer to carry out one or more steps of the method.

In a fourth aspect of the invention is provided a system for handling one or more associated food item(s) with an associated ID, such as a packaging comprising food, said system comprising:
- a reader, such as a scanner, configured for reading the ID of the food item,
- a conveyor, preferably a plurality of conveyors, for transporting the associated food item to a temporary storage area,
- a temporary storage area, preferably being a rotatable table, preferably circular,
- a sensor, preferably positioned at an arbitrary position along the conveyor, such as a photocell,
- a vision system, such as a vision camara, for capturing information from the storage area,
- a package area, such as a tray, and/or or a package object, such as a bag,
- a robotic arm for repositioning the food item from the storage area to the package area and/or the package object,
- a control system, for controlling the robotic arm based on input from at least the vision system, preferably also inputs from a controller.

The aspect is particularly, but not exclusively, advantageous for providing a system wherein the method of determining a packaging order can be executed.

Furthermore, a system is provided, wherein food items from numerous different brands/kitchens can be placed and gathered in one order.

The system is a fully automated system from the time when the food order is placed by a customer/consumer to the time when the food order is ready for delivery in one gathered order/delivery. The food may be automatically prepared, such as cooked and/or made by robots, however, manual preparing/cooking is preferred.

It should be understood that the consumers/customers of the system may place their orders through a number of different software and platforms, such as an app.

In the context of the present invention, it should be understood that "food item" is a food packaging, such as a box, a bowl, paper/wrap, or any desired packaging for food, wherein the packaging comprises a prepared/cooked food product, such as a burger, pizza, salad, sandwich, or any food placed in an order.

In the context of the present invention, it should be understood that "ID" can be various IDs, such as a bar code, a matrix code, a QR code, Radio Frequency ID, etc. The invention should not be limited to a specific type of ID.

The ID of the invention may at least be representing or comprising information about the food item, such as the type of food packaging and/or the dimensions of the food packaging.

Furthermore, the ID may comprise information on the material of the food packaging, the weight of the packaging and/or the food product in the packaging, information about the food product in the packaging, such as if the product is a warm, a cold or a frozen product and/or the texture of the food product, such as if the product is solid, fluid, hard, soft, etc.

The reader, such as a scanner, is configured for reading the ID of the food item when the food item is prepared and thereby ready (such as for pick-up or delivery). The scanner provides the opportunity to make a connection between the different food items and the gathered order thereby establishing when the full order is ready.

The at least one conveyor of preferably a plurality of conveyors in the system provides an easy, efficient and reliable transportation/distribution/movement of the associated food item, when the food product is prepared and positioned into a packaging, such as a box, a bowl, paper/wrap, etc., and should be moved from the kitchens to allow new food products to be prepared in the kitchens.

The temporary storage area, preferably being a rotatable table, and preferably circular, provides an area wherein the food being prepared and ready for being packed into orders can temporarily be stored while the rest of the order is prepared. Instead of having food stored in the kitchens and occupy space in the kitchens, the food items can temporarily be stored on this area. Also, the area makes it possible to easily sort several food items into different orders.

The sensor, such as a photocell, provides information on a food item before it enters the storage area, and thereby provides a system which only requires an extremely small temporary storage area compared to the amount of food items being handled in the system. It should be understood that the system can include a plurality of sensors, however, at least one sensor.

The vision system, such as a vision camera, provides the possibility of capturing information on the food items positioned at the storage area. The food items are each provided with an ID, and the vision system is at least capable of obtaining information from these different IDs and thereby automatically collect and sort the items into the right gathered order. The system may also be able to obtain information on the food item, such as shape and dimensions without the ID.

In the context of the present invention, it should be understood that the vision system may be both a 2D and/or 3D vision system. The robotic arm provides the opportunity to automatically reposition the food item from a storage area to the package area and/or the package object and automatically collect and sort the food item into a finished order.

It should be understood that "robotic arm" might be an end of arm tooling or the like.

The package area may be the final area/destination of the system, wherein an order is collected into one gathered order comprising one or more food items.

The control system provides at least the controlling of the robotic arm, such that the orders can be correctly collected and sorted into one gathered order. The control system is based on input from at least the vision system. Preferably, the control system would also be provided with inputs from the scanner and/or the sensor and/or other relevant elements connected to the system.

It should be understood that the control system may comprise a controller.

The first, second, third and fourth aspect of the present invention may each be combined with any of the other aspects. These and other aspects of the invention will be apparent from and elucidated with reference to the embodiments described hereinafter.

Embodiments from the system/product should be seen as applicable to the method, and embodiments from the method should be seen as applicable for the product/system.

### DESCRIPTION OF THE DRAWING

Various examples are described hereinafter with reference to the figures. Like reference numerals refer to like elements throughout. Like elements will, thus, not be described in detail with respect to the description of each figure. It should also be noted that the figures are only intended to facilitate the description of the examples. They are not intended as an exhaustive description of the claimed invention or as a limitation on the scope of the claimed invention. In addition, an illustrated example need not have all the aspects or advantages shown. An aspect or an advantage described in conjunction with a particular example is not necessarily limited to that example and can be practiced in any other examples even if not so illustrated, or if not so explicitly described.

Exemplary embodiments of the invention are described in the figures, wherein:
Figure 1 illustrates a diagram of time intervals and an order lifecycle.
Figure 2 illustrates an example of multiple kitchen stations providing several orders.

### DETAILED DESCRIPTION OF THE INVENTION

Exemplary examples will now be described more fully hereinafter with reference to the accompanying drawings. In this regard, the present examples may have different forms and should not be construed as being limited to the descriptions set forth herein. Accordingly, the examples are merely described below, by referring to the figures, to explain aspects.

Throughout the specification, when an element is referred to as being "connected" to another element, the element is "directly connected" to the other element, "electrically connected", "fluidically connected" or "communicatively connected" to the other element with one or more intervening elements interposed there between.

The terminology used herein is for the purpose of describing particular examples only and is not intended to be limiting. As used herein, the terms "comprises" "comprising" "includes" and/or "including" when used in this specification specify the presence of stated features, integers, steps, operations, elements, and/or components, but do not preclude the presence or addition of one or more other features, integers, steps, operations, elements, components, and/or groups thereof.

Unless otherwise defined, all terms used herein (including technical and scientific terms) have the same meaning as commonly understood by those skilled in the art to which this invention pertains. It will be further understood that terms, such as those defined in commonly used dictionaries, should be interpreted as having a meaning that is consistent with their meaning in the context of the relevant art and will not be interpreted in an idealized or overly formal sense unless expressly so defined in the present specification.

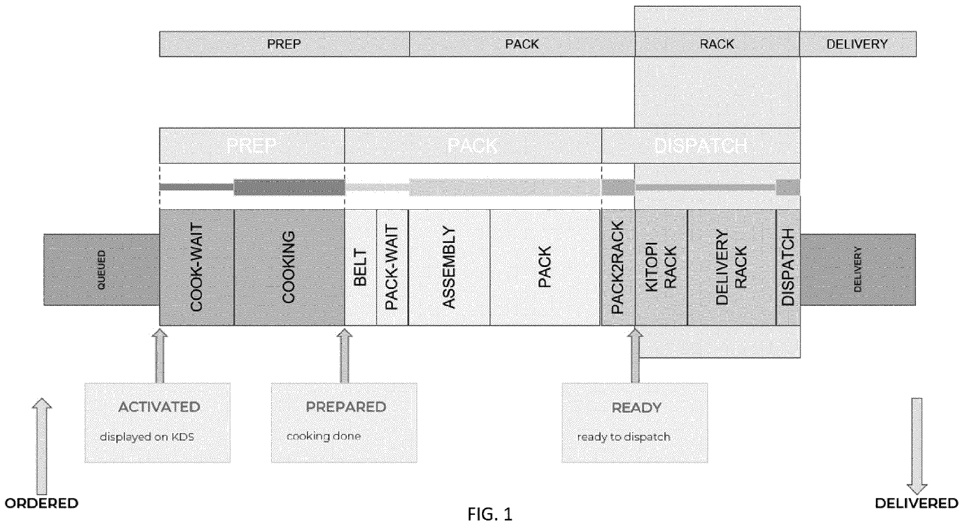

FIG. 1 illustrates a diagram of time intervals and an order lifecycle.
Within the invention several time intervals may be relevant, though the preferred time intervals are illustrated in FIG. 1.

The time intervals for each food item comprises one or more, preferably all, of:
- one or more preparation time intervals,
- one or more packing / handling time intervals, and/or
- one or more dispatch / delivery time intervals. Dispatch and delivery may be one accumulated time interval or two separate intervals,

wherein the preparation time intervals include at least one or more, preferably all, of:
   - queue time, the queue time is preferably 0,
   - prepare waiting time, this is where the time of the total time consumption of a food item is started/activated,
   - preparation time, and/or
   - first relocation time,
wherein the handling time intervals are at least one or more, preferably all, of:
   - waiting rack time,
   - collecting time, and/or
   - packing time,
wherein the delivery time intervals are at least one or more, preferably all, of:
   - second relocation time,
   - pick-up rack time, this is where the order is fully ready for being dispatched and preferably further ready delivery,
   - dispatch time, and/or
   - delivery time.

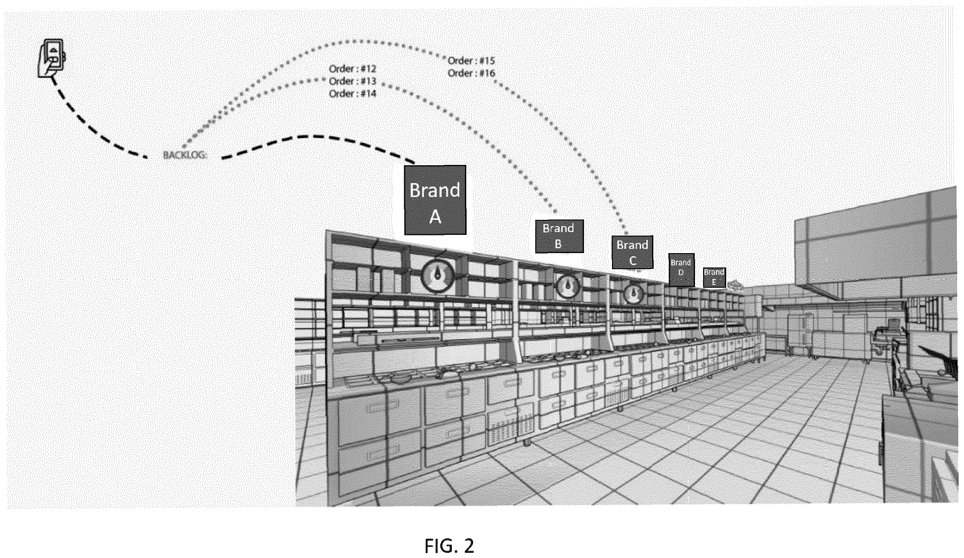

FIG. 2 illustrates an example of multiple kitchen stations providing several orders.

The illustration should only be seen as an example of multiple kitchen stations handling multiple food orders with several different food items in each order. The kitchens may be separated into different brands, such as McDonald, PizzaHot, SunSet, etc.

However, the kitchen may also be separated into different food categories, such as a fries kitchen, a pizza kitchen, a sushi kitchen, a soup kitchen, etc.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

## Claims

1. A computer-implemented method for managing a process of handling multiple food items, said food item(s) being packaging comprising food,
wherein each food item has a food item ID, preferably stored in a server, such as a database,
wherein said multiple food items are associated to one order ID,
said method comprising:
for each order ID:
- receiving the order ID and said multiple food item IDs; and
for each food item:
- retrieving one or more time intervals for the food item, preferably from a server, such as a database,
- calculating at least a total time consumption (ΔT,item) being a sum of the time intervals for the food item,
- generating a starting sequence of each food item comprised in the order comprising the acts of:
f. identifying the food item with the longest total time consumption,
g. setting an order time (ΔT,order) being the total time consumption of the identified food item,
h. for each of the remaining food items calculating a time difference (ΔT,item delay) between the order time and the total time consumption (ΔT,item) of each of the food items,
i. assigning an order starting time (Tstart) to the identified food item with the longest total time consumption,
j. for each of the remaining food items assigning a starting time (Tstart,item) based on the calculated time difference (ΔT,item) and the order starting time (Tstart), so that each food item in the order has the same expected end time (Tend).

2. A computer-implemented method according to claim 1, wherein a predetermined pick-up time is defined and/or given for the order, and wherein the calculation of the end time (Tend) of the order is adapted to correspond to the pick-up time.

3. A computer-implemented method according to any of the preceding claims, wherein a dish finish time for each food item is assigned to the food item, such as a time stamp, when said food item is packed into packaging.

4. A computer-implemented method according to any of the preceding claims, wherein the step of retrieving the one or more time intervals for each food item comprises one or more, preferably all, of:
- one or more preparation time intervals,
- one or more handling time intervals, and/or
- one or more delivery time intervals.

5. A computer-implemented method according to claim 4, wherein the preparation time intervals include at least one or more, preferably all, of:
- queue time,
- prepare waiting time,
- preparation time, and/or
- first relocation time.

6. A computer-implemented method according to claim 5, wherein if a queue time is retrieved, the starting time Tstart,item is generated to be activated, when the queue time has ended.

7. A computer-implemented method according to any of the preceding claims, wherein the one or more retrieved time intervals are handling time intervals,
wherein the handling time intervals are at least one or more, preferably all, of:
- waiting rack time,
- collecting time, and/or
- packing time.

8. A computer-implemented method according to any of the preceding claims, wherein the one or more retrieved time intervals are delivery time intervals,
wherein the delivery time intervals are at least one or more, preferably all, of:
- second relocation time,
- pick-up rack time,
- dispatch time, and/or
- delivery time.

9. A computer-implemented method according to any of the preceding claims, wherein the method further comprises the steps of:
- calculating the total time consumption for the order, wherein the total time consumption is a sum of preparation time intervals.

10. A computer-implemented method according to any of the preceding claims, wherein the method further comprises the steps of:
- calculating the total time consumption for the order, wherein the total time consumption is a sum of preparation time intervals and handling time intervals.

11. A computer-implemented method according to any of the preceding claims, wherein the method further comprises the steps of:
- calculating the total time consumption for the order, wherein the total time consumption is a sum of preparation time intervals, handling time intervals and delivery time intervals.

12. A computer-implemented method according to any of the preceding claims, wherein if a food item is late compared to the calculated total time consumption of that food item:
- recalculating the starting times for the rest of the food items in the order that are not yet activated, and
- assigning a recalculated starting time (Tstart,re) to each food item.

13. A computer-implemented method according to claim 12, wherein the recalculation of the starting times for the rest of the food items in the order that are not yet activated, comprises:
- adding the time of delay (Tdelay) to the original starting time (Tstart) to each food item.

14. A computer-implemented method according to any of the preceding claims, wherein an algorithm is configured for generating a starting sequence based on the retrieved time intervals of the food item(s).

15. A computer-implemented method according to any of the preceding claims, wherein the method further comprises the step of:
- providing a machine-learning model for improving the starting sequence of food items, and
- training the machine-learning model.
